# EUROPEAN PATENT SPECIFICATION

(11) **EP 4 210 904 B1**
(45) Date of publication and mention of the grant of the patent: **14.05.2025**
(21) Application number: 21773364.1
(22) Date of filing: 07.09.2021
(51) Int. Cl.: B24B 45/00, B24B 47/12, B24B 47/10, B24D 3/00, B23B 51/10, B23C 3/16, B23C 5/10, B24B 9/00

(54) **A MACHINING TOOL AND METHOD**
BEARBEITUNGSWERKZEUG UND VERFAHRE
OUTIL D'USINAGE ET PROCÉDÉ

(30) Priority: 07.09.2020 EP 20194817
(43) Date of publication of application: 19.07.2023
(73) Proprietor: Strecon A/S, 6400 Sønderborg (DK)
(72) Inventor: JEPSEN, Christian, 6400 Sønderborg (DK)
(74) Representative: Inspicos P/S
(86) International application number: PCT/EP2021/074570
(87) International publication number: WO 2022/049303

(56) References cited:
- DE-A1- 10 321 670
- JP-A- 2002 154 040
- JP-A- H1 086 050
- US-A1- 2019 337 062

## Description

### FIELD OF THE INVENTION

The present invention relates to a machining tool comprising a shaft which can be rotated by a motor about a first axis of rotation. The machining tool comprises a machining element for machining a surface of a workpiece, such as a surface of a mould. The invention further relates to a method of machining a surface.

### BACKGROUND OF THE INVENTION

During use of moulds for plastic injection moulding, part of the plastic material forming the moulded elements may be deposited in the moulds which consequently will have to be cleaned or machined on a regular basis. Traditionally, the moulds are cleaned by machining the moulds by use of a machining surface working in one plane, typically in an orbital movement pattern. Machining tools of the kind to which the invention pertains are used in different kinds of surface treatment including treatment of moulds. Other examples of machining relate to surface machining of tools for metal forming operations. Examples of tools are moulds for deep drawing, punching, sinter pressing, and cold or warm forging, etc. In traditional machining tools, e.g., traditional polishing or grinding tools, the work which is carried out by the polishing or grinding tool typically depends on the position and orientation of the tool relative to the workpiece, and a good result can only be expected by a specific orientation of the tool against the surface of the workpiece.

JP publication no 10086050 discloses a polishing tool with three polishing pads formed on a bottom face of a polishing head to obtain equal distance and angle in relation to the central axis of the polishing head 2 and the item to be polished. In this tool, the head is attached to a shaft by a universal joint allowing change in inclination of the head by rotation about an axis being perpendicular to the axis of rotation of the shaft. While this structure and particularly the universal joint may allow the head to follow the surface of the item which is polished, it does not produce any polishing movement caused by the rotation about the universal joint. A universal joint is a joint or coupling connecting rigid rods whose axes are inclined to each other and is commonly used in shafts that transmit rotary motion from a transmitting, rotating, shaft to receiving shaft being inclined to the transmitting shaft. It consists of a pair of hinges located close together, oriented at 90° to each other, connected by a cross shaft. The effect is simple rotation of the receiving shaft about its axis.

JP 2002 154040 A discloses a machining tool comprising a motor (implicitly disclosed) and an appliance, the appliance comprising a shaft which is rotatable by the motor about a first axis of rotation, and a machining element having an outer surface forming a contact surface for treatment of a workpiece.

### SUMMARY

It is an object of embodiments of the invention to provide an improved machining tool, and inter alia to provide a machining tool being less dependent on specific positions and orientations. It is a further object to provide a tool capable of performing a specifically suitable polishing movement, herein referred to as *"nodding movement"* of the polishing tool. This is a movement where a surface is moved back and forth along a path which forms a curvature in a projection plane.

It is a further object of embodiments of the invention to provide an improved method of machining a surface.

According to a first aspect, the invention provides a machining tool as defined in claim 1.

In a second aspect to a method of machining a surface as defined in claim 15.

The appliance comprises a shaft which can be rotated about a first axis of rotation by the motor. The machining tool further comprises a machining element forming a contact surface for treatment of a surface of a workpiece. The machining element is rotationally attached to the shaft for rotation relative to the shaft about a second axis of rotation, wherein the first axis of rotation and the second axis of rotation form an angle α, so that the first axis of rotation and the second axis of rotation are not parallel and not perpendicular.

The desired effect is not obtained if the first and second axes, X1 and X2 are parallel or perpendicular, the angle, α, should be oblique meaning distinct from 0 and 90 degrees. Particularly between 5-85, or 10-80, or 15-75 degrees.

Herein, the feature of the machining element being attached to the shaft for rotation relative to the shaft about a second axis, X2, of rotation, means that it can revolve unlimited, i.e., any number of turns, about the second axis, X2.

By the combination between rotation of the shaft about the first axis, and rotation of the machining element about second axis being at oblique angle, α, to the first axis, the machining element creates a nodding movement relative to the shaft. The nodding movement is a result of the machining element rotating about the second axis of rotation while the second axis of rotation revolves about the first axis of rotation.

If rotation speed of the shaft around the first axis of rotation is referred to as Ω1, and rotation speed of the machining element about the second axis of rotation is referred to as Ω2, and rotation of the machining element about the first axis of rotation is referred to as Ω3, then the ratio between Ω1, Ω2, and Ω3 is changeable. It can be changed e.g., by use of friction between the machining element and the surface which is treated. If the friction between the treated surface and the machining element is sufficiently high, it may reduce Ω3, e.g., to zero. If Ω3 is zero, the motion is a pure nodding motion. If Ω3 is different from zero, the motion may be a combination between nodding motion and rotation.

Non-limiting examples of machining and treatment of a surface is polishing, grinding, and deburring. Particularly, the machining tool may be configured for abrasive machining, which herein means surface treatment by use of abrasive media and methods.

In use, the shaft is rotated about the first axis of rotation by the motor.

The contact surface may particularly be curved since that provides a suitable match with the nodding motion.

The appliance may e.g., be reversibly detachable from the motor. The motor may e.g., form part of a drill, a polisher, or similar rotating power tool, having a rotating spindle onto which the shaft is attached, or the machining tool may include a motor in fixed engagement with the shaft. Since the machining element is attached rotationally to the shaft for rotation about a second axis of rotation, it may freely rotate about the second axis of rotation when the shaft is rotated around the first axis of rotation.

In one embodiment, the shaft constitutes a rotor of an electric motor and thereby form an integrated part of the motor.

Due to the non-parallel and non-perpendicular axes, the machining tool can translate rotation of the shaft into oscillating movement of the machining element, i.e. a nodding up and down movement of the machining element relative to the shaft. The degree of translation from rotation into the oscillating, nodding, movement can be changed by changing said ratio between Ω1, 2 and 3, and as a result, the machining tool can define a unique movement pattern where force can be directed towards rotation or oscillation depending on the ratio between Ω1, Ω 2, and Ω 3. When the rotation of the machining element is suppressed, the rotational force is translated into oscillation force, and the more the rotation is hindered, the more of the force is translated. Reversely, the less the rotation movement is suppressed, the less force is translated into oscillation. The unique pattern can be mirrored by reversing the direction of rotation about the first axis of rotation.

Even though the machining element is rotatable relative to the shaft about the second axis of rotation, such rotatability is always subject to a certain friction. Even when the rotatability is provided by roller or ball bearings or similar low friction bearings, a certain friction will exist and the rotation of the shaft about the first axis of rotation will therefore, implicitly, rotate the machining element about the first axis of rotation via friction in the bearing structure between the shaft and the machining element.

If the contact surface is pressed against the surface of the workpiece, the rotation of the machining element may be stopped by overcoming the friction in the bearing structure between the machining element and the shaft. By overcoming this friction, the rotation of the machining element about the first axis of rotation, i.e., Ω3, is suppressed, e.g. to the degree where it stops, but due to the angle, α, the force is transferred to the oscillating movement and the machining element will move up and down in the mentioned nodding movement. In this situation, a balance will be established between resistance against rotation and resistance against oscillation.

The balance depends on the resistance in the bearings which resistance will work towards rotating the machining element, the resistance against rotation of the machining element caused by friction between the machining element and the workpiece, and the resistance against oscillation caused by the friction between the machining element and the workpiece. Herein, we refer to the "balance of translation" as the balance between rotation and oscillation.

By the mentioned arrangement of the curved contact surface relative to the shaft, the contact surface can work in all directions with a consistent result, and a universal machining characteristics may thus be provided.

The outer surface of the machining element forms a curved contact surface, and may particularly form a 3-dimentional curvature, e.g., forming a fraction of a sphere, and that sphere may particularly form a centre point where the first axis of rotation intersects the second axis of rotation.

In that way, the contact surface may oscillate equally in all directions which makes the machining conditions independent on locations and angles of the machining element and the surface which is treated. That facilitates easy and flexible use of the machining tool since the work is independent on orientations or locations of the machining tool relative to the object to be treated.

By the term "sphere" is herein meant an element which is at least substantially spherical, i.e. has circular cross sections within plus or minus 10 percent deviations on a radial dimension from a centre point to the sphere.

The fraction may be 90% of a sphere, such as 80%, such as 70% or even less than 60% or less than 50 %. In one embodiment, the fraction is far less than 50 pct. Of the sphere, e.g. as little as 20 or 10 %. It the context of the present invention 'a fraction of a sphere' should be understood as a portion of a sphere cut off by a plane; i.e. a part of a sphere where a part has been removed. Thus, the outer surface may be shaped as a combination of a sphere part and a plane surface part. Particularly, the sphere part may form the contact surface and the plane surface part may face towards the shaft.

Even though the machining element may be less than 50 % of a sphere and thereby constitute a 3D curved surface rather than a sphere, however, it may still be an aspect to arrange the centre of the sphere in the position where the first and second axis of rotation intersects.

In use, a counter directed force is created when the machining element contacts a surface of the workpiece. The counterforce will typically change the balance of translation and the impact of the counterforce typically exceeds the friction force through the bearings and therefore defines the degree of translation from rotation of the machining element to oscillation of the machining element.

If the outer surface contacts the surface which is to be machined only at the point where the first axis of rotation intersects the outer surface, the moment created by the counter directed force becomes zero, and balance of translation changes. In such a situation, the friction through the bearings, and the resistance against oscillation which is mainly caused by the friction between the machining element and the workpiece, may exceed the counter directed force of rotation thereby changing the degree of translation, e.g., to the point where the machining element starts to rotate, and the oscillation fades out.

To overcome the friction through the bearing structure and to induce the oscillating movement of the machining element, rotation of the machining element must be limited or stopped. This can, as mentioned above be done by the friction between the machining element and the workpiece. However, to increase controllability of the ratio between Ω1, Ω 2, and Ω 3, i.e. between rotation and oscillation, the machining tool may comprise a restriction structure configured to apply a braking torque on the machining element, and particularly, an adjustable braking torque. The restriction structure may thus control the balance of translation.

The machining element may be made of copper, brass, steel casting, plastic of various hardness, wood of various hardness, and/or felt or textile of various hardness.

The motor may be an external motor arranged in communication with the shaft or a motor attached to the shaft. In one embodiment, the motor may be arranged in a cavity in the shaft or at the shaft.

In one embodiment, the machining tool may be integrated in a numerically controlled machine such as a robot or a CNC milling, grinding, or drilling machine, which may allow for automatic machining.

The workpiece may as an example be made of steel, tungsten carbide, or ceramics. Machining may be carried out substantially without deforming the machining element when moving the machining element in contact with the surface of the workpiece.

The machining tool may further comprise a biasing member, such as one or more springs. The biasing member may ensure that contact between the machining element and the workpiece is substantially constant and with a substantially even pressure.

The shaft may comprise a telescopic shaft section allowing for extension of the shaft to thereby enlarge the area which can be machined. If the embodiments where the machining tool is integrated in a numerically controlled machine, the telescopic shaft section may be controlled by the numerically controlled machine. The control may be carried out automatically. In an alternative embodiment, the control of the telescopic shaft section is carried out manually.

In an embodiment, the angle α is in the range of 2-175 degrees, such as in the range of 10-170 degrees. The size of the angle, α, may depend on the size and/or shape of the surface of the workpiece, and/or of the type of material which is deposited on the surface. In a preferred embodiment, the angle, α, is in the range of 5< α < 90 degrees, such as in the range of 10-80 degrees.

The end of the shaft may form a substantially planar surface, and the machining element may be attached to the shaft at that end face.

The machining element may be attached to the shaft via an interface, which interface may be elongated to form an axle extending along the second axis of rotation, whereby the interface may form an extension to the shaft extending non-parallel to the shaft. The interface may extend from the end face of the shaft.

Rotation of the machining element relative to the shaft about the second axis of rotation may be established in different ways:
1. In one embodiment, the interface is fixedly arranged relative to the shaft, i.e., the axle or similar structure is made in one piece with the shaft or made as a separate piece fixed non-rotationally to the shaft, e.g. by gluing or welding etc. The interface can therefore not rotate relative to the shaft.
   To allow the machining element to rotate about the second axis of rotation, the machining element may rotate relative to the interface. This may be achieved by use of a bearing structure, such as at least one ball bearing, at least one roller bearing, at least one sleeve bearing, at least one needle bearing, or other suitable elements allowing the machining element to rotate about the second axis of rotation.
2. In an alternative embodiment, the interface is rotational arranged relative to the shaft. In this embodiment, the axle or similar structure is attached to the shaft via a bearing structure including e.g. a ball bearing, a roller bearing, a sleeve bearing, a needle bearing, or other suitable elements allowing the interface to rotate about the second axis of rotation relative to the shaft.
   In this, second embodiment, the machining element may be fixedly attached to the interface, whereby machining element can rotate about the second axis of rotation by rotation of the interface.
3. In a combined embodiment, the interface is rotational both relative to the machining element and relative to the shaft.

The shaft may be an elongated element, e.g. having the shape of a rod.

The interface may extend centrally from the end portion of the shaft. In an alternative embodiment, the interface may extend off-set from the centre of the end portion of the shaft.

Machining, and particularly polishing, grinding, or deburring, may be facilitated by use of an abrasive, such as an abrasive paste. The abrasive may as an example comprise diamond e.g., in a paste of diamond, silicon carbide, aluminium oxide, and/or cubic boron nitride. Abrasive materials may also be used, either alone or in combination with the mentioned examples.

Additionally, or as an alternative to abrasives, the machining element may comprise a layer of diamond or CBN, sandpaper for wet or dry sanding, emery cloth, stone etc.

Additionally, or as an alternative Compound/Sinter may be used, e.g., metal in combination with an abrasive or rubber in combination with an abrasive.

To facilitate use of an abrasive, at least one flow path may extend through at least a part of the shaft to the machining element. The at least one flow path may be arranged for a flow of an abrasive. The flow path may be formed as a conduit extending at least partly inside the shaft. In an alternative embodiment, the flow path may comprise a tube which may be attached to the outer surface of the shaft. In a further alternative, a part of the flow path may be arranged inside a cavity of the shaft, whereas another part of the flow path may be arranged outside the shaft.

The at least one flow path may additionally be arranged for a flow of a liquid. The liquid flow may be provided to sweep away the abrasive and/or elements being removed from the surface during machining of the workpiece.

In one embodiment, the abrasive and the liquid may be provided through separate flow paths, where one or more first flow paths are arranged for a flow of the abrasive, and where one or more second flow paths are arranged for a flow of liquid. By the term 'arranged for a flow of an abrasive' should be understood that an inlet to the flow path can be arranged in communication with a container/box of abrasive, and 'arranged for a flow of liquid' means that an inlet to the flow path can be arranged in communication with a container/reservoir of liquid.

In an alternative embodiment, one or more flow path may be arranged for a flow of an abrasive and flow of liquid. Thus, the inlet to the flow path can be arranged in communication with a container/box of abrasive and a container/reservoir of liquid. This may be achieved by providing the flow path configured to shift between the abrasive and the liquid.

Shifting between abrasive and liquid may be done manually or automatically, e.g. in response to a predetermined time schedule where abrasive is provided during a first time period and liquid is provided during a second time period. In one embodiment, the first and second time periods may be identical.

The outer surface of the machining element may comprise at least one opening arranged in communication with the at least one flow path to allow discharge of the abrasive and/or liquid. In an alternative embodiment, the outlet of the flow path may be arranged on the outer surface of the machining element whereby the outer surface may be an uninterrupted surface.

To facilitate distribution and/or discharge of the abrasive and/or the liquid, a porous material may be arranged in at least one of the at least one openings in the outer surface of the machining element. The porous material may slow down the discharge of the abrasive and/or liquid, as the abrasive and/or the liquid may be absorbed in the porous material.

The machining element may be detachable attached to the machining tool. This may allow for detachment of the machining element for repair or for exchange of the machining element in case of damages. Furthermore, a machining element may be exchanged to a larger or a smaller machining element during use, and/or a machining element with another outer surface characteristic to thereby change the machining ability of the tool.

A first end of the interface may be attached in an indentation in the machining element. In the embodiment, where the outer surface of the machining element is shaped substantially as a fraction of a sphere, the indentation may be arranged at the plane part of the outer surface.

In the embodiment, where the interface is fixedly attached to the shaft and the machining element is rotationally attached to the interface, a frictional bearing may be arranged at least partly in the indentation.

The shaft may preferably be elongated and may have a length being the dimension along the first axis of rotation and a width being perpendicular to the length. The width may be nonuniform along the length of the shaft. The machining element may have a diameter being the dimension of the machining element perpendicular to the second axis of rotation. The diameter may be the largest dimension of the machining element perpendicular to the second axis of rotation in embodiments where the machining element is not shaped substantially as a fraction of a sphere. In one embodiment, the diameter may be at least twice the width of the shaft.

The length of the shaft may be in the range of 10-500 mm, such as 50-250 mm. The machining element may have any size suitable for a specific task. In one example, the diameter of the machining element may be in the range of 1-200 mm, such as 10-50 mm. The length of the shaft and/or the diameter of the machining element in an alternative embodiment may be different.

According to a second aspect, the invention provides a method of machining a surface of a workpiece by use of a machining tool according to the first aspect of the invention; the method comprising the steps of;
- providing the machining tool according to any of the preceding claims;
- activating a motor to rotate the shaft about the first axis of rotation;
- bringing the machining element into contact with the surface;
- creating a relative rotation of the machining element relative to the shaft around the second axis of rotation, X2, the relative rotation establishing oscillating movement of the machining element relative to the shaft; and
- moving the machining element along the surface.

The relative rotation of the machining element relative to the shaft around the second axis of rotation may be created by friction by pressing the machining element against a surface to be machined, or it may be created by control of said restriction structure to thereby suppress Ω3.

The machining element may be moved continuously in different directions in contact with and along the surface to be machined. This may in one embodiment be achieved by integrating the machining tool in a numerically controlled machine. Furthermore, machining may be carried out with the machining element exerting a substantially even pressure at the surface.

The machining may particularly be polishing, grinding, or deburring, and the surface to be machined may have a first hardness, whereas and the machining element may have a second hardness. The first hardness may be different from the second hardness.

A skilled person would readily recognise that any feature described in combination with the first aspect of the invention could also be combined with the second aspect of the invention, and vice versa, i.e., any of the features of the appliance described relative to the machining tool of the first aspect may apply also for the appliance of the second aspect of the invention.

The machining tool according to the first aspect of the invention is very suitable for performing the method steps according to the second aspect of the invention. The remarks set forth above in relation to the machining tool are therefore equally applicable in relation to the method.

### BRIEF DESCRIPTION OF THE DRAWINGS

Embodiments of the invention will now be further described with reference to the drawings, in which:
Fig. 1a illustrates an embodiment of a machining tool in use;
Fig. 1b illustrates schematically the nodding movement in a plane;
Fig. 2 illustrates an embodiment of a machining tool;
Figs. 3-5 illustrate different exploded-views of an embodiment of a machining tool;
Figs. 6-7 illustrate a restriction structure for the machining tool; and

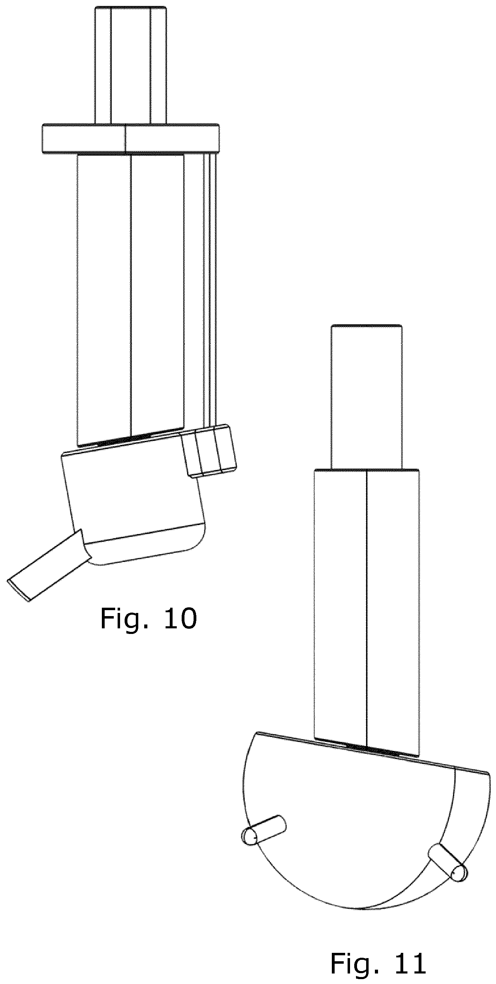

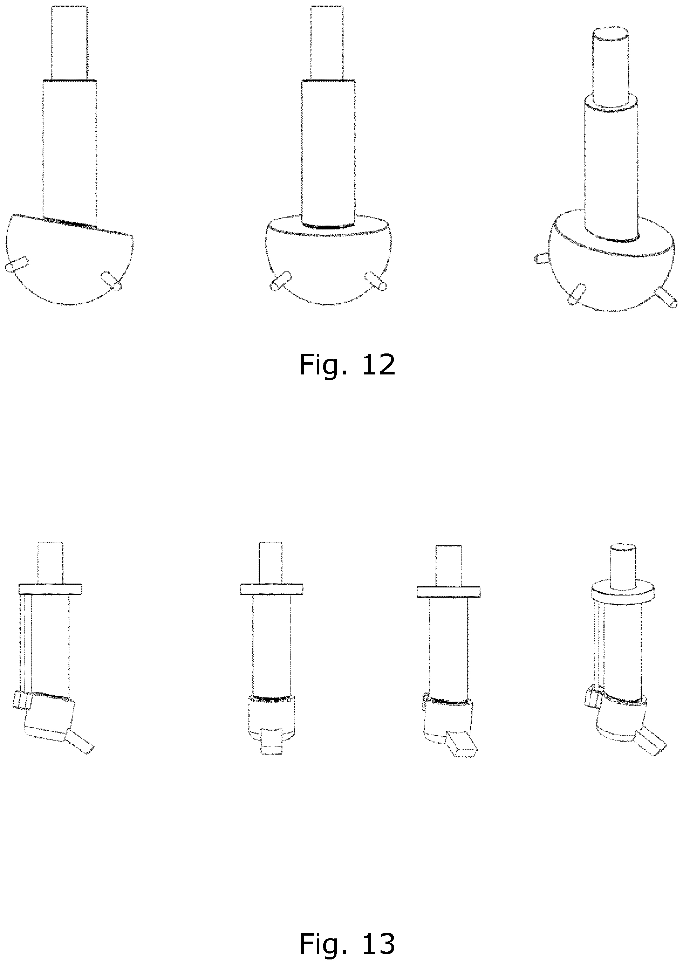

Figs. 8-13 illustrate different embodiments of the machining element.

### DETAILED DESCRIPTION OF THE DRAWINGS

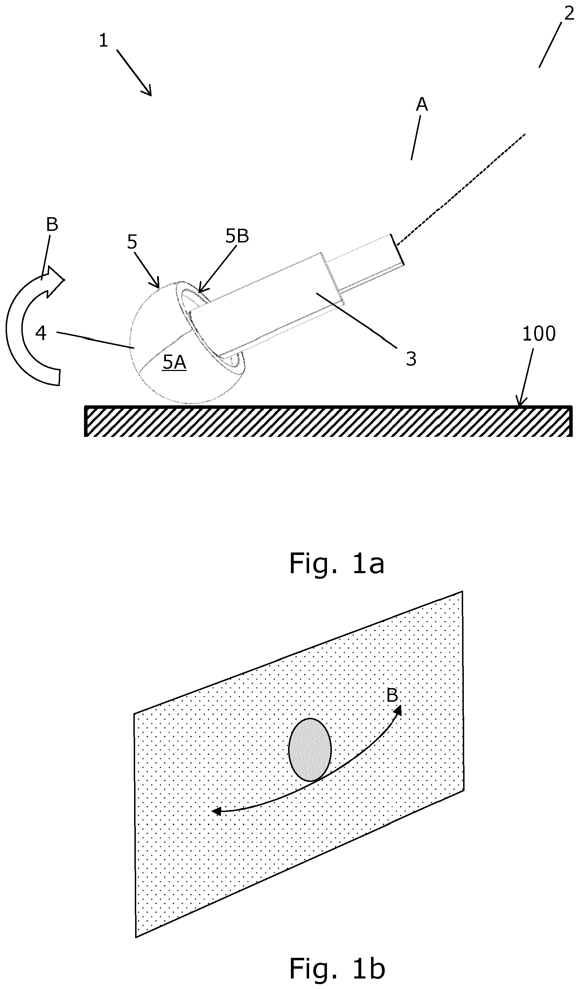

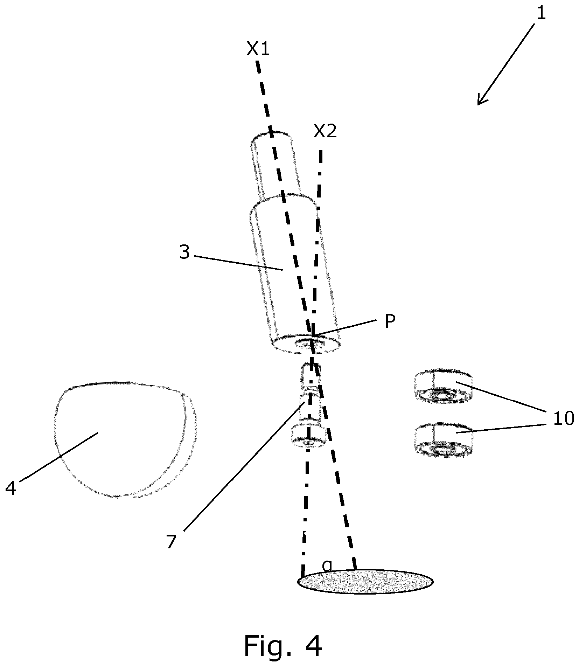

Fig. 1a illustrates an embodiment of a machining tool 1 during use. The machining tool 1 comprises a motor 2, a shaft 3, and a machining element 4. The motor 2 is arranged to rotate the shaft 3 about a first axis of rotation X1 (see Fig. 4) as indicated by the arrow A. The motor 2 is schematically illustrated at a distance from the shaft 2 and connected to the shaft by a dotted line.

The machining element 4 is rotational attached to the shaft 3 for rotation about a second axis of rotation X2 (see Fig. 4). The first axis of rotation X1 and the second axis of rotation X2 form an angle α (see Fig. 4), so that the first axis of rotation X1 and the second axis of rotation X2 are non-parallel. The machining element 4 comprising an outer surface 5 being configured to machine a surface 100 of a workpiece. In the specific embodiment, the outer surface is configured for polishing.

In the illustrated embodiment, the outer surface 5 of the machining element 4 comprises a curved surface, as the outer surfaces 5 is shaped substantially as a fraction of a sphere, i.e., the outer surface 5 forms of a sphere part 5A and a plane surface part 5B. An indentation 6 is formed in the outer surface 5 in the plane surface part 5B hereof.

Due to the balance of translation, rotation of the machining element may be converted into oscillation as indicated by the arrow B. The arrow B extends in a plane, which indicates a pure nodding movement which is obtained when Ω3 is zero.

Fig. 1b illustrates the arrow B in a cross-section plane. The oscillation is herein generally referred to as a nodding movement. The illustrated pure nodding movement requires Ω3 to be zero.

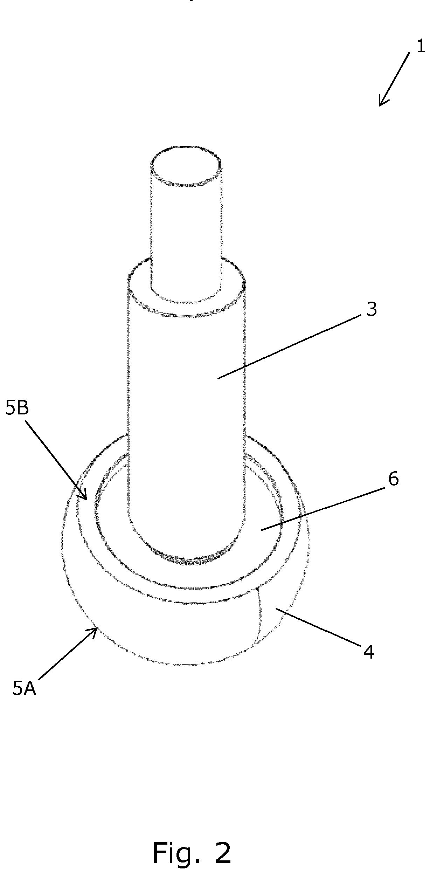

Fig. 2 illustrates another view of the embodiment of the machining tool illustrated in Fig. 1. The motor is not shown in Fig. 2.

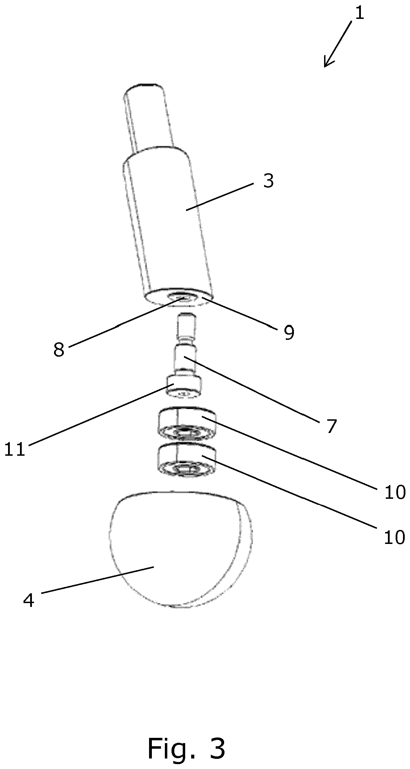

Figs. 3-5 illustrate different exploded views of the embodiment of the machining tool 1 illustrated in Figs. 1 and 2.

The machining element 4 is in the illustrated embodiment attached to the shaft 3 via an interface 7, which interface 7 is elongated and extends along the second axis of rotation X2 (see Fig. 4). Thereby, the interface 7 forms an extension to the shaft 3 extending non-parallel to the shaft.

The machining element forms a section of a sphere and the centre of the sphere is located where the first and second axis of rotation intersects. This provides the advantage that the machining element oscillates identically in all directions. Combined with the spherical shape that provides a machining pattern which is identical irrespective where the machining element is in contact with the surface to be treated.

Fig. 3 illustrates an opening 8 formed in an end portion 9 of the shaft 3. The interface 7 is inserted in the opening 8 and extends off-set from the centre of the end portion 9 of the shaft 3.

The interface 7 is fixedly arranged relative to the shaft 3, whereby the interface 7 does not rotate relative to the shaft 3. In the illustrated embodiment, the interface 7 and the shaft 3 are formed as two separate elements which are subsequently attached to each other.

To allow the machining element 4 to rotate about the second axis of rotation, the machining element 4 is rotationally attached to the shaft 3 by being rotationally attached to the interface 7. This is achieved by use of a bearing structure, in this embodiment including two ball bearings 10.

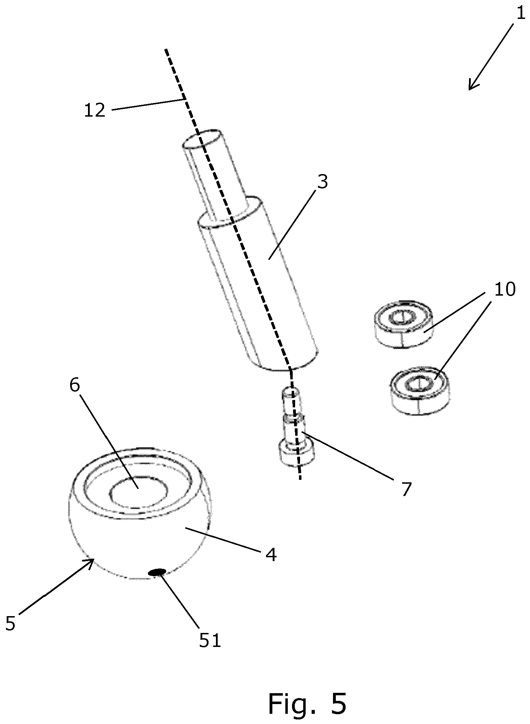

The ball bearings 10 are circumferential arranged relative to a first end 11 of the interface 7, and they are arranged in the indentation 6 (see Fig. 5) in the machining element 4.

A flow path 12 (illustrated by the dotted line in Fig. 5) extends through the shaft 3 to the machining element 4. The flow path 12 is arranged for a flow of an abrasive. The abrasive and a liquid may alternatingly flow in the flow path 12.

The outer surface 5 of the machining element 4 comprises an opening 13 arranged in communication with the flow path 12 to allow discharge of the abrasive and/or liquid.

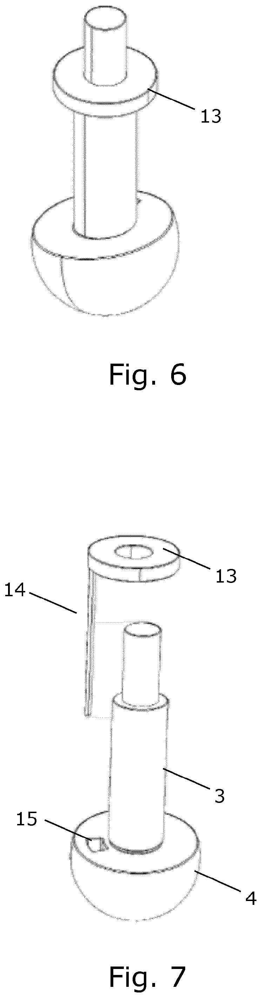

Figs. 6 and 7 illustrate an alternative embodiment comprising a restriction structure configured for controlling the balance of translation. The restriction structure comprises a restriction element 13 and a connector 14, the latter being received in an indentation 15 in the machining element 4. The restriction structure may rotate with a rotational speed Ω3, particularly a speed which is different from the rotational speed Ω1 by which the shaft 3 rotates about the first axis of rotation. The rotational speed Ω3 may be anything from zero to the speed Ω1. In one embodiment, the restriction element 13 is fixed to a non-rotating point and in another embodiment, the restriction element 13 is rotated by a motor at a speed different from the rotation speed of the shaft 3.

The restriction structure limits rotation of the machining element 4 about the first axis of rotation X1 and thereby forces rotation of the machining element 4 to rotate about the second axis of rotation X2 relative to the shaft 3 when the shaft rotates. When the rotational speed Ω3 is zero, or when the machining element 4 is prevented from rotating by friction against the workpiece, the movement of the machining element becomes pure oscillation without rotation.

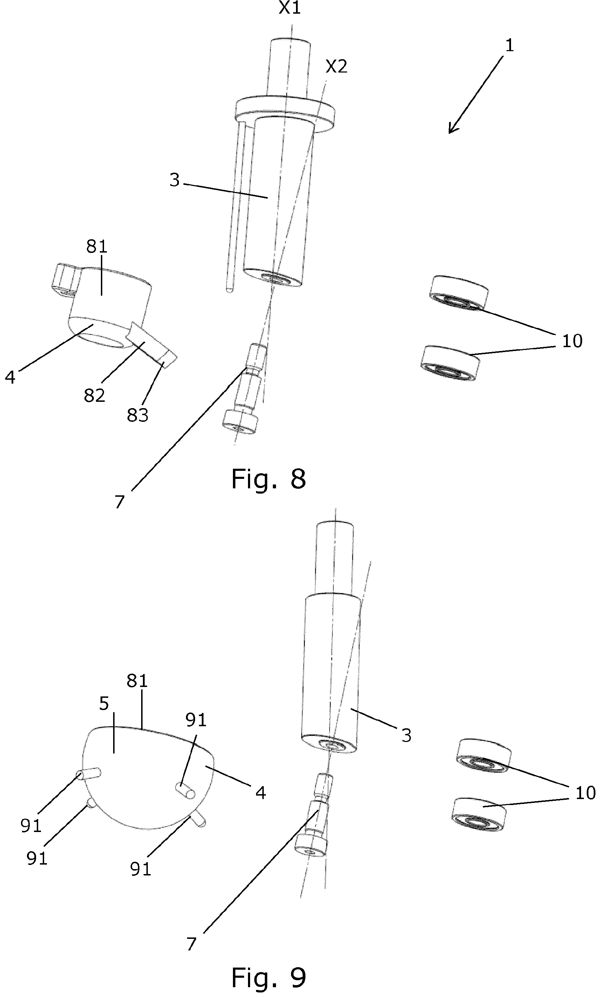

Figs. 8-9 illustrate different embodiments of the machining element 4. In Fig. 8, the machining element 4 comprises a base 81 and one or more projections 82. The outer surface 83 of the projection 82 may form a fraction of a sphere. Due to the elongated shape of the projection, it may enter narrow spaces wherein the outer surface 83 may be used for polishing, grinding, or deburring purposes.

In Fig. 9, the machining element 4 comprises a base 81 and a plurality of projections 91. The projections 91 are soft, resilient elements e.g., made of rubber. These projections will engage the work piece and prevent rotation of the machining element 4 while the outer surface 5 of the machining element 4 provides surface treatment of the work piece.

## Claims

1. A machining tool (1) comprising a motor and an appliance, the appliance comprising:
- a shaft (3) which is rotatable by the motor (2) about a first axis (X1) of rotation, and
- a machining element (4) having an outer surface (5) forming a contact surface for treatment of a workpiece and being attached to the shaft (3) for rotation relative to the shaft (3) about a second axis (X2) of rotation,
wherein the first axis (X1) of rotation and the second axis (X2) of rotation form an oblique angle (a), so that the first axis (X1) of rotation and the second axis (X2) of rotation are non-parallel and non-perpendicular.

2. The machining tool according to claim 1, wherein the contact surface is curved.

3. The machining tool according to claim 2, wherein the curved contact surface forms a fraction of a sphere (5A).

4. The machining tool according to claim 3, wherein the sphere forms a centre point (P) where the first axis of rotation intersects the second axis of rotation.

5. The machining tool according to any of the preceding claims, comprising a restriction structure (13, 14, 15) configured to restrict rotation of the machining element (4) about the first axis (X1) of rotation

6. The machining tool or appliance according to claim 5, wherein the restriction structure (13, 14, 15) is configured, by restricting rotation of the machining element (4) about the first axis (X1) of rotation, to force the machining element (4) to rotate about the second axis (X2) of rotation.

7. The machining tool according to any of the preceding claims, wherein the angle a is in the range of 4-80 degrees.

8. The machining tool according to any of the preceding claims, wherein the machining element (4) is rigidly joined to the shaft to define the angle a as a fixed angle which is not adjustable.

9. The machining tool according to any of the preceding claims, wherein the machining element (4) is attached to the shaft via an interface (7), the interface (7) being elongated and extending along the second axis of rotation.

10. The machining tool according to claim 9, wherein the interface (7) extends into an opening (8) in an end portion (9) of the shaft (3) into an elongated cavity in the shaft.

11. The machining tool according to claim 9 or 10, wherein the interface (7) extends into an indentation in the machining element (4).

12. The machining tool according to any of the preceding claims, wherein the machining element (4) is rotational attached to the shaft via at least one bearing structure (10).

13. The machining tool according to any of claims 9-12, wherein the interface (7) is rotational arranged relative to the shaft (3).

14. The machining tool according to any of claims 9-12, wherein the interface (7) is fixedly arranged relative to the shaft (3).

15. A method of machining a surface by use of a machining tool (1) according to any of the preceding claims; the method comprising the steps of:
- providing the machining tool (1) according to any of the preceding claims;
- activating the motor (2) to rotate the shaft (3);
- bringing the machining element (4) into contact with the surface;
- creating a relative rotation of the machining element (4) relative to the shaft (3) around the second axis of rotation (X2), the relative rotation establishing oscillating movement of the machining element (4) relative to the shaft (3); and
- moving the machining element (4) along the surface.

## Patentansprüche

1. Bearbeitungswerkzeug (1), das einen Motor und eine Apparatur umfasst, wobei die Apparatur umfasst:
- eine Welle (3), die durch den Motor (2) um eine erste Drehachse (X1) drehbar ist, und
- ein Bearbeitungselement (4) mit einer Außenfläche (5), die eine Kontaktfläche für eine Behandlung eines Werkstücks bildet und an der Welle (3) angebracht ist, um sich relativ zu der Welle (3) um eine zweite Drehachse (X2) zu drehen,
wobei die erste Drehachse (X1) und die zweite Drehachse (X2) einen schiefen Winkel (α) bilden, so dass die erste Drehachse (X1) und die zweite Drehachse (X2) nicht parallel und nicht senkrecht verlaufen.

2. Bearbeitungswerkzeug nach Anspruch 1, wobei die Kontaktfläche gekrümmt ist.

3. Bearbeitungswerkzeug nach Anspruch 2, wobei die gekrümmte Kontaktfläche einen Teil einer Kugel (5A) bildet.

4. Bearbeitungswerkzeug nach Anspruch 3, wobei die Kugel einen Mittelpunkt (P) bildet, an dem sich die erste Drehachse mit der zweiten Drehachse schneidet.

5. Bearbeitungswerkzeug nach einem der vorstehenden Ansprüche, das eine Restriktionsstruktur (13, 14, 15) umfasst, die dazu ausgestaltet ist, eine Drehung des Bearbeitungselements (4) um die erste Drehachse (X1) zu begrenzen.

6. Bearbeitungswerkzeug oder Apparatur nach Anspruch 5, wobei die Begrenzungsstruktur (13, 14, 15) dazu ausgestaltet ist, das Bearbeitungselement (4) durch Begrenzen einer Drehung des Bearbeitungselements (4) um die erste Drehachse (X1) zu einer Drehung um die zweite Drehachse (X2) zu zwingen.

7. Bearbeitungswerkzeug nach einem der vorstehenden Ansprüche, wobei der Winkel α in dem Bereich von 4 bis 80 Grad liegt.

8. Bearbeitungswerkzeug nach einem der vorstehenden Ansprüche, wobei das Bearbeitungselement (4) starr mit der Welle verbunden ist, um den Winkel α als festen Winkel zu definieren, der nicht einstellbar ist.

9. Bearbeitungswerkzeug nach einem der vorstehenden Ansprüche, wobei das Bearbeitungselement (4) über eine Schnittfläche (7) an der Welle angebracht ist, wobei die Schnittfläche (7) länglich ist und sich entlang der zweiten Drehachse erstreckt.

10. Bearbeitungswerkzeug nach Anspruch 9, wobei sich die Schnittstelle (7) in eine Öffnung (8) in einem Endabschnitt (9) der Welle (3) in einen länglichen Hohlraum in der Welle erstreckt.

11. Bearbeitungswerkzeug nach Anspruch 9 oder 10, wobei die Schnittfläche (7) sich in eine Vertiefung in dem Bearbeitungselement (4) erstreckt.

12. Bearbeitungswerkzeug nach einem der vorstehenden Ansprüche, wobei das Bearbeitungselement (4) über zumindest eine Lagerstruktur (10) an der Welle drehgelagert ist.

13. Bearbeitungswerkzeug nach einem der Ansprüche 9 bis 12, wobei die Schnittfläche (7) in Bezug auf die Welle (3) drehbar angeordnet ist.

14. Bearbeitungswerkzeug nach einem der Ansprüche 9 bis 12, wobei die Schnittfläche (7) relativ zu der Welle (3) unveränderlich angeordnet ist.

15. Verfahren zum Bearbeiten einer Oberfläche unter Verwendung eines Bearbeitungswerkzeugs (1) nach einem der vorstehenden Ansprüche; wobei das Verfahren die Schritte umfasst;
- Bereitstellen des Bearbeitungswerkzeugs (1) nach einem der vorstehenden Ansprüche;
- Aktivieren des Motors (2), um die Welle (3) zu drehen;
- Inkontaktbringen des Bearbeitungselements (4) mit der Oberfläche;
- Erzeugen einer relativen Drehung des Bearbeitungselements (4) relativ zu der Welle (3) um die zweite Drehachse (X2), wobei die relative Drehung eine oszillierende Bewegung des Bearbeitungselements (4) relativ zu der Welle (3) bewirkt; und
- Bewegen des Bearbeitungselements (4) entlang der Oberfläche.

## Revendications

1. Outil d'usinage (1) comprenant un moteur et un appareil, l'appareil comprenant :
- un arbre (3) qui peut être entraîné en rotation par le moteur (2) autour d'un premier axe (X1) de rotation, et
- un élément d'usinage (4) présentant une surface extérieure (5) formant une surface de contact pour le traitement d'une pièce à usiner et étant fixé à l'arbre (3) pour une rotation par rapport à l'arbre (3) autour d'un deuxième axe (X2) de rotation,
dans lequel le premier axe (X1) de rotation et le deuxième axe (X2) de rotation forment un angle oblique (α), de sorte que le premier axe (X1) de rotation et le deuxième axe (X2) de rotation sont non parallèles et non perpendiculaires.

2. Outil d'usinage selon la revendication 1, dans lequel la surface de contact est incurvée.

3. Outil d'usinage selon la revendication 2, dans lequel la surface de contact incurvée forme une fraction d'une sphère (5A).

4. Outil d'usinage selon la revendication 3, dans lequel la sphère forme un point central (P) où le premier axe de rotation coupe le deuxième axe de rotation.

5. Outil d'usinage selon l'une quelconque des revendications précédentes, comprenant une structure de restriction (13, 14, 15) configurée pour restreindre la rotation de l'élément d'usinage (4) autour du premier axe (X1) de rotation.

6. Outil d'usinage ou appareil selon la revendication 5, dans lequel la structure de restriction (13, 14, 15) est configurée, en limitant la rotation de l'élément d'usinage (4) autour du premier axe (X1) de rotation, pour forcer l'élément d'usinage (4) à tourner autour du deuxième axe (X2) de rotation.

7. Outil d'usinage selon l'une quelconque des revendications précédentes, dans lequel l'angle α est compris entre 4 et 80 degrés.

8. Outil d'usinage selon l'une quelconque des revendications précédentes, dans lequel l'élément d'usinage (4) est relié de manière rigide à l'arbre pour définir l'angle α comme un angle fixe qui n'est pas réglable.

9. Outil d'usinage selon l'une quelconque des revendications précédentes, dans lequel l'élément d'usinage (4) est fixé à l'arbre via une interface (7), l'interface (7) étant allongée et s'étendant le long du deuxième axe de rotation.

10. Outil d'usinage selon la revendication 9, dans lequel l'interface (7) s'étend dans une ouverture (8) dans une partie d'extrémité (9) de l'arbre (3) dans une cavité allongée dans l'arbre.

11. Outil d'usinage selon la revendication 9 ou 10, dans lequel l'interface (7) s'étend dans une indentation dans l'élément d'usinage (4).

12. Outil d'usinage selon l'une quelconque des revendications précédentes, dans lequel l'élément d'usinage (4) est fixé en rotation à l'arbre via au moins une structure de palier (10).

13. Outil d'usinage selon l'une quelconque des revendications 9 à 12, dans lequel l'interface (7) est disposée de manière rotative par rapport à l'arbre (3).

14. Outil d'usinage selon l'une quelconque des revendications 9 à 12, dans lequel l'interface (7) est disposée de manière fixe par rapport à l'arbre (3).

15. Procédé d'usinage d'une surface au moyen d'un outil d'usinage (1) selon l'une quelconque des revendications précédentes ; le procédé comprenant les étapes consistant à :
- fournir l'outil d'usinage (1) selon l'une quelconque des revendications précédentes ;
- activer le moteur (2) pour faire tourner l'arbre (3) ;
- amener l'élément d'usinage (4) en contact avec la surface ;
- créer une rotation relative de l'élément d'usinage (4) par rapport à l'arbre (3) autour du deuxième axe de rotation (X2), la rotation relative établissant un mouvement oscillant de l'élément d'usinage (4) par rapport à l'arbre (3) ; et
- déplacer l'élément d'usinage (4) le long de la surface.
